# EUROPEAN PATENT SPECIFICATION

(11) **EP 0 502 383 B1**
(45) Date of publication and mention of the grant of the patent: **13.08.1997**
(21) Application number: 92102961.7
(22) Date of filing: 21.02.1992
(51) Int. Cl.: D03C 9/06, F16B 7/04

(54) **Healdframe of a weaving machine**
Webschaft für einen Webstuhl
Cadre de métier à tisser

(30) Priority: 06.03.1991 CS 575/91
(43) Date of publication of application: 09.09.1992
(73) Proprietor: Tovarny textilnich potreb-ELITEX, a.s., 46604 Jablonec nad Nisou (CZ)
(72) Inventor: Bilek, Jan, Liberec (CS); Spidlen, Emil, Liberec (CS); Nechanicky, Jan, Jablonec nad Nisou (CS)
(74) Representative: Beetz & Partner Patentanwälte

(56) References cited:
- EP-A- 0 295 189
- FR-A- 2 593 862
- US-A- 4 283 157
- US-A- 4 741 367

## Description

The invention relates to a healdframe according to the preamble of the independent claim. Such a healdframe is known from US-A 741 367. The inventive healdframe belongs to a weaving machine and comprises a heald rod with a hollow area into which are inserted flat protrusions of the healdframe edge piece (healdframe end).

In forming the shed, the edge pieces of healdframes move in guides, either on the outer or on the inner surfaces. The decreasing depth of the harness system involves decreasing thickness of the healdframes, and it becomes very difficult to ensure a sufficiently strong and at the same time disassemblable connection of the heald rods with the edge pieces, indispensable for obtaining high rigidity and long service life of the healdframe as a whole at high frequencies of non-orthodox weaving machines.

There exist in the prior art healdframes in which the disassemblable connection of the heald rod with the edge piece is made by means of connecting means and screws passing through the holes in the edge pieces in the direction of the heald rod. This type of the connection of the heald rod with the edge piece impairs the profile of the healdframe edge piece by holes snd reduces the strength and rigidity of the healdframe proper. In other known healdframes, the fixed connection is provided for by the edge piece having a protrusion inserted into the hollow areas of the healdframe heald rod, and by coupling means situated chiefly in the heald rod proper. Such connections of the heald rod and the edge piece are as a rule complicated and consist of a plurality of coupling means.

US-A-4 741 367 discloses a healdframe comprising a frame stave and a side stay including at least one protection. The protection has the form of a square or of a "C" directed away from the side stay. The connection between the side stay and the frame stave is made with a spacer of resilient material such as a rubber and a retaining member excerting pressure on the resilient material.

FR-A-2 593 862 discloses a connecting piece for hollow profiles. It comprises a cylindrical member having two outwardly projecting pieces, one of them to be depressed by a screw being held by the one member and the other of them engaging with a hole in the other member. The element is constituted by a plurality of sub-members.

It is the object of the invention to provide a healdframe having a simple and reliable connecting mechanism between a heald rod and an edge piece.

This object is solved in accordance with the features of claim 1. Dependent claims are directed on preferred embodiments of the invention.

This has been achieved by the healdframe according to the invention whose principle consists in that in a flat protrusion of the edge piece there is created a cylindrical recess in which is pivotally mounted a clamping segment on whose front part bears a pressure means and whose rear part bears on a rest fixed in the heald rod. The clamping segment is made of a cylinder from which parts of its circumference were cut off.

It is advantageous to make the clamping segment as a cylinder cut off by plane surfaces parallel to its axis and making an obtuse angle.

In each of the previous embodiments, it is advantageous to make the rest as a support pin whose ends are seated in the heald rod.

The advantage of the new type of connection of the healdframe edge piece and the heald rod of the healdframe consists in that it ensures high strength of the connection and, consequently, high rigidity and service life of the healdframe while permitting it to be easily disassembled and enabling uncomplicated production of the healdframe parts. Another advantage consists in the possibility to use this connection system for any profile of the healdframe edge piece in the guide area and for any embodiment of the heald rod having at least one hollow area.

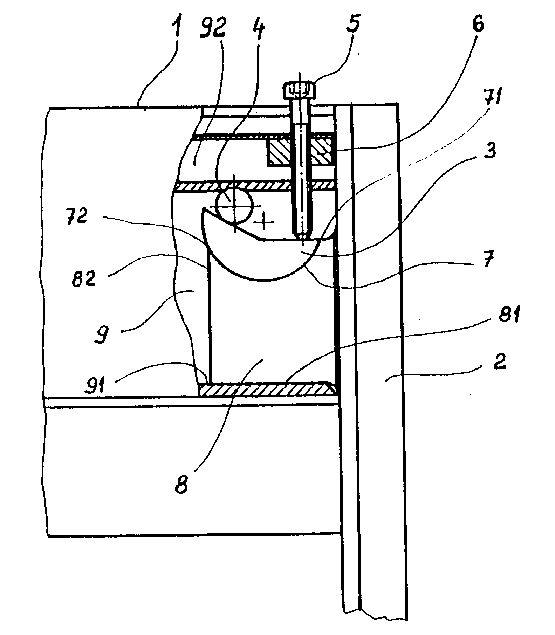

An embodiment of a healdframe of a weaving machine according to the invention, given by way of example, is shown schematically in the accompanying drawing representing in section the connection of the heald rod and the edge piece of the healdframe.

In the example of the embodiment of the healdframe according to the invention, an edge piece 2 is in the area of connection with a heald rod 1 provided with a flat protrusion 8 reaching into a hollow area 9 of the heald rod 1, the thickness of the protrusion 8 corresponding to the width of the hollow area 9 of the heald rod 1. On the flat protrusion 8 is provided a support surface 81 bearing on an inner support surface 91 provided in the hollow area 9 of the heald rod 1. In a surface opposite to the support surface 81 there is provided in the flat protrusion 8 a cylindrical recess 7 in which is freely rotatably mounted a clamping segment 3 shaped as a sector of a cylindrical body.

In the embodiment shown by way of example, the clamping segment 3 is made as a cylinder cut off by at least two plane surfaces parallel to its axis and making an obtuse angle. The clamping segment 3 can be made also as a cylinder with more than two plane surfaces out of which at leaat two make an obtuse angle. In another embodiment, some plane surfaces can be replaced by surfaces partly curved or fitted with various projections or recesses. The thickness of the clamping segment 3 corresponds to the width of the hollow area 9 of the heald rod 1.

The cylindrical recess 7 in the flat protrusion 8 of the edge piece 2 is shaped in such a way that the deepest point of the cylindrical recess lies between the beginning 71 of the cylindrical recess 7 at the edge piece 2 and the end 72 of the cylindrical recess 7 made in the front wall 82 of the flat protrusion 8 of the edge piece 2, as illustrated in the embodiment shown by way of example, or the end of the cylindrical recess 7 can be made in the wall of the opposite support surface 81 of the flat protrusion 8.

Over the flat protrusion 8 of the edge piece 2 and across the hollow area 9 of the heald rod 1 is fixed a rest consisting for instance of a support pin 4. The permanent connection of the heald rod 1 and of the supporting pin 4 is obtained for instance by clinching the suport pin 4 on its ends or in another known manner.

In the outer longitudinal ribs of the heald rod 1, over the flat protrusion 8, are made coaxial holes for passing through them pressure means, represented in the illustrated embodiment by a bolt 5 with a nut 6 seated in an outer hollow area 92 of the heald rod 1. The nut 6 is in the hollow area 92 of the heald rod 1 freely seated. By retightening the bolt 5 the nut 6. bears on the wall of the hollow area 92 of the heald rod 1 and is thus exactly fixed in position.

The fixing of the support pin 4 by clinching in the heald rod 1 increases the rigidity of the heald rod 1 proper in the area of its connection with the edge piece 2.

The act of connecting the heald rod 1 and the edge piece 2 is carried out as follows: The clamping segment 3 is inserted into the cylindrical recess 7 of the flat protrusion 8 of the edge piece 2. Then, the flat protrusion 8 of the edge piece, together with the inserted clamping segment 3, is introduced into the hollow area 9 of the heald rod 1. After the introduction of the flat protrusion 8 of the edge piece 2 into the hollow area 9 of the heald rod 1, the front part of the clamping segment 3 is exposed to pressure generated by pressure means, i.e., in the embodiment shown by way of example, by screwing the bolt 5 into the nut 6. The tightening of the bolt 5 makes the nut 6 bear on the wall of the hollow area 92 of the heald rod 1 and thus define exactly the nut position while the bolt 5 exerts pressure force on the clamping segment 3 turning in the cylindrical recess 7 of the flat protrusion 8 of the edge piece 2, until the surface of the rear part of the clamping segment 3 comes to bear on the support pin 4. In this way is achieved a solid (fixed) disassemblable connection of the heald rod 1 of the healdframe with the edge piece 2.

## Claims

1. Healdframe of a weaving machine comprising a heald rod (1) with a hollow area into which are inserted flat protrusions (8) of an edge piece (2),
characterized in that
in at least one flat protrusion (8) of the edge piece (2) there is created a cylindrical recess (7), in which is pivotally and rotatably mounted a clamping segment (3) on whose front part bears a pressure means (5) and whose rear part bears on a rest (4) fixed in the heald rod (1), said clamping segment being made as a cylinder cut off by at least two plane surfaces parallel to its axis and making an obtuse angle or by more than two plane surfaces of which at least two make an obtuse angle, wherein some plane surfaces can be replaced by surfaces partly curved or fitted with various projections or recesses.

2. Healdframe as claimed in claim 1, characterized in that the rest is made as a support pin (4) whose ends are seated in the heald rod (1).

3. Healdframe as claimed in claim 1 or 2, characterized in that the pressure means is designed as an adjustable screw bolt (5) fixed in longitudinal ribs of the heald rod (1) and secured by a unit (6) freely seated in the hollow area (92) of the heald rod (1).

## Patentansprüche

1. Geschirrschaft einer Webmaschine enthaltend einen Schaftstab (1) mit einem Hohlraum, in den flache Vorsprünge eines Randteils (2) eingreifen, dadurch gekennzeichnet, daß in wenigstens einem flachen Vorsprung (8) des Randteils (2) eine zylindrische Ausnehmung (7) vorgesehen ist, in der ein Einspannsegment (3) schwenk- und drehbar angeordnet ist, auf dessen Vorderseite ein Andrückmittel (5) aufliegt und dessen Hinterteil auf eine im Schaftstab (1) befestigte Stütze (4) aufliegt, wobei das Einspannsegment (3) als ein Zylinder ausgebildet ist, der abgeschnitten ist durch wenigstens zwei mit seiner Achse parallele, einen stumpfen Winkel einschließende Planflächen oder durch mehr als zwei Planflächen, von denen wenigstens zwei einen stumpfen Winkel einschließen, wobei einige von den Planflächen durch teilweise gekrümmte oder mit verschiedenen Vorsprüngen oder Ausnehmungen versehene Flächen ersetzt werden können.

2. Geschirrschaft nach Anspruch 1, dadurch gekennzeichnet, daß die Stütze als Abstützzapfen (4) ausgebildet ist, dessen Enden im Schaftstab (1) gelagert sind.

3. Geschirrschaft nach Anspruch 1 oder 2, dadurch gekennzeichnet, daß das Andrückmittel als ein in den Längsrippen des Schaftstabs (1) arretierter und durch eine im Hohlraum (92) des Schaftstabs (1) frei gelagerte Einheit (6) befestigter Bolzen (5) ausgebildet ist.

## Revendications

1. Lame d'une machine à tisser comprenant une baguette (1) munie d'une cavité dans laquelle sont insérées des saillies plates (8) d'une pièce terminale (2), caractérisée en ce que dans au moins une saillie plate (8) de la pièce terminale est prévu un évidement cylindrique (7) dans lequel est logé à pivotement et à rotation un segment de serrage (3) contre la partie antérieure duquel s'appuie un moyen de pression (5) et dont la partie postérieure s'appuie contre une butée (4) fixée dans la baguette (1), le segment de serrage (3) précité étant réalisé sous forme d'un cylindre découpé par au moins deux surfaces planes parallèles à son axe et formant un angle obtus ou par plus de deux surfaces planes dont deux au moins forment un angle obtus, queleques-unes des surfaces planes pouvant être remplacées par des surfaces en partie recourbées ou pourvues de différents évidements ou saillies.

2. Une lame selon la revendication 1, caractérisée en ce que la butée est réalisée sous forme d'une cheville d'appui (4) les bouts de laquelle sont logés dans la baguette (1).

3. Une lame selon la revendication 1 ou 2, caractérisée en ce que le moyen de pression est réalisé sous forme d'un boulon (5) ajustable fixé dans les côtes longitudinales de la baguette (1) et assuré par une unité (6) librement logée dans la cavité (92) de la baguette (1).
